# EUROPÄISCHE PATENTSCHRIFT

(11) **EP 2 578 465 B1**
(45) Veröffentlichungstag und Bekanntmachung des Hinweises auf die Patenterteilung: **06.11.2019**
(21) Anmeldenummer: 12006442.3
(22) Anmeldetag: 14.09.2012
(51) Int. Cl.: B60W 30/18, F02N 11/08, B60W 50/00, B60W 10/06

(54) **Verfahren zum Betrieb eines Kraftfahrzeugs**
Method for operating a motor vehicle
Procédé destiné au fonctionnement d'un véhicule automobile

(30) Priorität: 06.10.2011 DE 102011114972
(43) Veröffentlichungstag der Anmeldung: 10.04.2013
(73) Patentinhaber: AUDI AG, 85045 Ingolstadt (DE)
(72) Erfinder: Bär, Michael, 85049 Ingolstadt (DE)
(74) Vertreter: Thielmann, Frank

(56) Entgegenhaltungen:
- EP-A1- 1 069 311
- DE-A1-102008 011 709
- DE-A1-102009 010 926
- FR-A1- 2 863 953
- JP-A- 2004 132 333
- US-A1- 2005 143 901
- US-A1- 2011 005 486
- US-A1- 2011 071 746

## Beschreibung

Die Erfindung betrifft ein Verfahren zum Betrieb eines Kraftfahrzeugs, umfassend eine Steuereinrichtung zum automatischen und fahrerunabhängigen Ein- oder Ausschalten wenigstens eines Antriebsaggregats des Kraftfahrzeugs im Stand, welche Steuereinrichtung in Abhängigkeit wenigstens einer die Ist-Position des Kraftfahrzeugs auf einem Fahrweg betreffenden positionsbezogenen Fahrwegsinformation sowie in Abhängigkeit des Vorliegens wenigstens einer weiteren Randbedingung ein Ausschalten des Antriebsaggregats veranlasst.

Es ist bekannt, moderne Kraftfahrzeug zum Zwecke der Kraftstoffeinsparung mit Steuereinrichtungen zum automatischen und fahrerunabhängigen Ein- oder Ausschalten wenigstens eines Antriebsaggregats des Kraftfahrzeugs im Stand auszustatten. Üblicherweise veranlassen entsprechende Steuereinrichtungen ein Ausschalten des Antriebsaggregats, insbesondere einer Brennkraftmaschine, des Kraftfahrzeugs, wenn das Kraftfahrzeug zum Stillstand kommt. Dabei ist es insbesondere möglich, dass die Steuereinrichtung in Abhängigkeit wenigstens einer die Ist-Position des Kraftfahrzeugs auf einem Fahrweg betreffenden positionsbezogenen Fahrwegsinformation sowie in Abhängigkeit des Vorliegens wenigstens einer weiteren Randbedingung ein Ausschalten des Antriebsaggregats veranlasst. Mithin fragt die Steuereinrichtung eine Mehrzahl an für ein Abschalten des Antriebsaggregats regelungsrelevanten Randbedingungen, wie z. B. Motordrehzahl, Reifenumdrehung etc. des Kraftfahrzeugs, ab, wobei auch die Ist-Position des Kraftfahrzeugs auf einem befahrenen Ist-Fahrweg in Form einer positionsbezogenen Fahrwegsinformation berücksichtigt werden kann.

Im Allgemeinen wird das Antriebsaggregat über eine vom Fahrer zu gebende, seine Abfahrbereitschaft anzeigende Eingabe wieder betrieben bzw. angeschaltet. Entsprechende Steuereinrichtungen werden auch als so genannte Start-Stopp-Automatik bezeichnet oder können Teil einer entsprechenden Start-Stopp-Automatik sein.

Ein Verfahren ist beispielweise gemäß dem Oberbegriff des Anspruchs 1 aus US 2005/0143901 A1 bekannt. Weiterer Stand der Technik ist aus US 2011/005486 A1 und DE 10 2008 011709 A1 bekannt.

Dabei ist ein über eine entsprechende Steuereinrichtung vorgenommenes Abschalten des Antriebsaggregats insbesondere für den Fahrer regelmäßig störend, wenn ein besonders kurzfristiges und zügiges Anfahren, wie etwa bei Einfahren in einen Kreisverkehr aus dem Stand oder Einfahren auf eine Autobahn aus dem Stand, erforderlich ist. Hierbei kann gegebenenfalls sogar ein Sicherheitsrisiko für Insassen des Kraftfahrzeugs sowie andere Verkehrsteilnehmer entstehen, da die Steuereinrichtung einen gewünschten Wiederanfahrvorgang des Kraftfahrzeugs aus dem Stand mit ausgeschaltetem Antriebsaggregat nur mit einer zeitlichen Verzögerung zulässt, welche der Fahrer falsch einschätzt.

Der Erfindung liegt das Problem zugrunde, ein, insbesondere im Hinblick auf eine Steuerung des automatischen und fahrerunabhängigen Ausschaltens des Antriebsaggregats des Kraftfahrzeugs im Stand, verbessertes Verfahren zum Betrieb eines Kraftfahrzeugs anzugeben.

Das Problem wird erfindungsgemäß durch ein Verfahren der eingangs genannten Art gelöst, welches die im Anspruch 1 angegebenen Merkmale aufweist.

Das erfindungsgemäße Verfahren ermöglicht sonach ein situationsadaptives Ab- oder Ausschalten des Antriebsaggregats, insbesondere einer Brennkraftmaschine, eines Kraftfahrzeugs, wobei als zentrales Abfragekriterium der Steuereinrichtung die die Ist-Position des Kraftfahrzeugs auf einem Fahrweg, insbesondere dem Ist-Fahrweg, betreffende positionsbezogene Fahrwegsinformation herangezogen wird. Die positionsbezogene Fahrwegsinformation wird im Rahmen des erfindungsgemäßen Verfahrens zunächst ausschließlich ermittelt. Nur in Situationen, in denen die positionsbezogene Fahrwegsinformation das wenigstens eine fahrwegsbezogene Kriterium nicht erfüllt, wird das Vorliegen weiterer steuerungsrelevanter Randbedingungen abgefragt und somit gegebenenfalls ein Ausschalten des Antriebsaggregats des Kraftfahrzeugs im Stand herbeigeführt. In Fällen, in denen die positionsbezogene Fahrwegsinformation das wenigstens eine fahrwegsbezogene Kriterium erfüllt, wird die Abfrage des Vorliegens weiterer Randbedingungen nicht durchgeführt. Mithin ist der Vergleich der die Ist-Position des Kraftfahrzeugs auf dem Fahrweg betreffenden fahrwegsbezogenen Positionsinformation mit dem fahrwegsbezogenen Kriterium zeitlich allen weiteren im Rahmen des erfindungsgemäßen Verfahrens zur Durchführung eines automatischen und fahrerunabhängigen Abschaltens des Antriebsaggregats erforderlichen Maßnahmen, d. h. insbesondere der Abfrage der wenigstens einen Randbedingung, vorangestellt.

Unter einer positionsbezogenen Fahrwegsinformation ist insbesondere eine Information zu verstehen, welche eine Angabe der Ist-Position des Kraftfahrzeugs auf einem Fahrweg, insbesondere dem Ist-Fahrweg, beschreibt. Hierfür sind zum einen absolute Positionsdaten des Kraftfahrzeugs, welche z. B. über ein GPS-Signal ermittelt werden können, und zum anderen Daten über den jeweiligen Fahrweg, welche z. B. über einen Abgleich eines GPS-Signals mit in einem Speicher hinterlegtem Kartenmaterial ermittelt werden können, erforderlich. Mithin kann die positionsbezogene Fahrwegsinformation beispielsweise angeben, an welcher Position bzw. auf welchem Abschnitt des von diesem befahrenen Fahrweg sich das Kraftfahrzeug aktuell befindet. Hierbei können fahrwegspezifische, den weiteren Verlauf des (Ist-) Fahrwegs betreffende Informationen berücksichtigt werden. Grundsätzlich liegt der positionsbezogenen Fahrwegsinformation sonach ein Verlauf des aktuell von dem Kraftfahrzeug befahrenen Fahrwegs, d. h. des Ist-Fahrwegs zugrunde. Die positionsbezogene Fahrwegsinformation stellt also die Ist-Position des Kraftfahrzeugs auf dem Ist-Fahrweg dar, mithin werden die Ist-Position des Kraftfahrzeugs und der Ist-Fahrweg zu einander in Bezug gesetzt.

Insbesondere ist es möglich, dass die positionsbezogene Fahrwegsinformation die Ist-Position des Kraftfahrzeugs auf dem aktuell von diesem befahrenen Fahrweg, d. h. dem Ist-Fahrweg, hochaufgelöst bzw. hochgenau darstellt, so dass die Ist-Position des Kraftfahrzeugs auf dem Ist-Fahrweg z. B. mit einer metergenauen Auflösung erfassbar ist. Positionsbezogene Fahrwegsinformation können kontinuierlich oder innerhalb vorgegebener oder vorgebbarer zeitlicher Intervalle, d. h. zu vorgegebenen oder vorgebbaren Zeitpunkten ermittelt werden.

Es ist insofern ebenso möglich, anhand der positionsbezogenen Fahrwegsinformation ausgehend von der Ist-Position des Kraftfahrzeugs auf dem Ist-Fahrweg und unter Berücksichtigung des weiteren Verlaufs des Ist-Fahrwegs zu der Ist-Position wenigstens eine hierzu in einem bestimmten Abstand vorausliegende bestimmte Fahrwegssituation oder Fahrwegskonstellation zu ermitteln. Konkret kann die positionsbezogene Fahrwegsinformation ausgehend von der Ist-Position des Kraftfahrzeugs auf dem Ist-Fahrweg z. B. angeben, dass sich das Kraftfahrzeug in einem bestimmten Abstand zu einem in den Ist-Fahrweg einmündenden weiteren Fahrweg, d. h. einer Kreuzung, Einmündung oder dergleichen befindet.

Im Rahmen des erfindungsgemäßen Verfahrens werden entsprechende positionsbezogene Fahrwegsinformationen mit wenigstens einem fahrwegsbezogenen Kriterium verglichen bzw. abgeglichen. Unter einem fahrwegsbezogenen Kriterium ist erfindungsgemäß eine Einmündung in einen Kreisverkehr oder in eine Schnellstraße zu verstehen.

Erfindungsgemäß kann anhand des Vergleichs der positionsbezogenen Fahrwegsinformation mit dem fahrwegsbezogenen Kriterium z. B. ermittelt werden, ob sich das Kraftfahrzeug direkt an einer Einmündung in einen Kreisverkehr befindet, wobei hier das fahrwegsbezogene Kriterium erfüllt ist, oder, ob sich das Kraftfahrzeug (noch) in einem solchen hinreichend großen Abstand zu der Einmündung in den Kreisverkehr befindet, in dem das fahrwegsbezogene Kriterium (noch) nicht erfüllt ist. Weiterhin betrifft erfindungsgemäß ein fahrwegsbezogenes Kriterium eine Einmündung in eine Schnellstraße, wobei dieses erfüllt ist, wenn die positionsbezogene Fahrwegsinformation angibt, dass sich das Kraftfahrzeug direkt an der Einmündung in die Schnellstraße befindet, und entsprechend nicht erfüllt ist, wenn die positionsbezogene Fahrwegsinformation angibt, dass sich das Kraftfahrzeug (noch) in einem hinreichend großen Abstand zu der Einmündung in die Schnellstraße befindet.

Das fahrwegsbezogene Kriterium enthält sonach insbesondere bezogen auf den aktuell von dem Kraftfahrzeug befahrenen Ist-Fahrweg bestimmte, insbesondere vorausliegende, Fahrwegssituationen oder Fahrwegskonstellationen des Ist-Fahrwegs. Diese werden von der positionsbezogenen Fahrwegsinformation erfüllt, sobald das Kraftfahrzeug diese erreicht respektive sich diesen bis zu einem bestimmten Abstandsgrenzwert annähert.

Mithin kann das fahrwegsbezogene Kriterium auch einen bestimmten Abstandsgrenzbereich um eine entsprechende Fahrwegssituation und/oder Fahrwegskonstellation umfassen. Es ist insofern beispielsweise denkbar, dass das fahrwegsbezogene Kriterium bereits erfüllt ist, wenn sich das Kraftfahrzeug in einem vorgegebenen oder vorgebbaren Abstand zu einer bestimmten vorausliegenden Fahrwegssituation oder Fahrwegskonstellation befindet. Konkret kann das fahrwegsbezogene Kriterium sonach bereits erfüllt sein, wenn sich das Kraftfahrzeug z. B. 5m vor einer Einfahrt in einen Kreisverkehr befindet. Dies kann sich beispielsweise ergeben, wenn sich das Kraftfahrzeug hinter einem weiteren, direkt vor der Einfahrt in einen Kreisverkehr stehenden Kraftfahrzeug, d. h. also mit einem bestimmten Abstand zu der Einfahrt in den Kreisverkehr befindet.

Mithin kann das fahrwegsbezogene Kriterium auch einen vorgegeben oder vorgebbaren Abstandsgrenzwertbereich zu einer bestimmten Fahrwegssituation oder Fahrwegskonstellation im Sinne eines Abstandskorridors um die jeweilige Fahrwegssituation bzw. Fahrwegskonstellation umfassen, bei Erreichen oder Unterschreiten dessen das Kraftfahrzeug und somit die positionsbezogene Fahrwegsinformation das fahrwegsbezogene Kriterium erfüllt.

Wie erwähnt, erfolgt erfindungsgemäß, sofern der Vergleich der positionsbezogenen Fahrwegsinformation mit dem fahrwegsbezogenen Kriterium ergibt, dass das fahrwegsbezogene Kriterium erfüllt ist, keine Abfrage des Vorliegens weiterer Randbedingungen. D. h., die Möglichkeit des automatischen und fahrerunabhängigen Ausschaltens des Antriebsaggregats des Kraftfahrzeugs im Stand durch die Steuereinrichtung ist unterdrückt, so lange die positionsbezogene Fahrwegsinformation das oder wenigstens ein fahrwegsbezogenes Kriterium erfüllt. Mithin kann das automatische und fahrerunabhängige Ausschalten des Antriebsaggregats des Kraftfahrzeugs im Stand z. B. unterdrückt werden, wenn sich das Kraftfahrzeug direkt an einer bestimmten Fahrwegssituation oder Fahrwegskonstellation, wie z. B. einer Einfahrt in einen Kreisverkehr, oder in einem bestimmten Abstand oder Abstandsbereich zu der bestimmten Fahrwegssituation oder Fahrwegskonstellation befindet. Da das Antriebsaggregat im Rahmen des erfindungsgemäßen Verfahrens nicht grundsätzlich automatisch und fahrerunabhängig im Stand des Kraftfahrzeugs ausgeschaltet wird, ist es für den Fahrer möglich, das Kraftfahrzeug in einer gegebenenfalls ein schnelles Anfahren des Kraftfahrzeugs erforderlichen Verkehrssituation schneller in den Fahrbetrieb zu versetzen, um z. B. schnell in den fließenden Verkehr einfädeln zu können.

Mithin können Wiederanfahrvorgänge des Kraftfahrzeugs, sofern die positionsbezogene Fahrwegsinformation das fahrwegsbezogene Kriterium erfüllt, schneller, d. h. im Wesentlichen wie bei einem Kraftfahrzeug ohne eine entsprechende Steuereinrichtung zum automatischen und fahrerunabhängigen Ausschalten des Antriebsaggregats des Kraftfahrzeugs im Stand, ausgeführt werden. Es ist also mit dem erfindungsgemäßen Verfahren möglich, den Wiederanfahrvorgang des Kraftfahrzeugs aus dem Stand durch Unterdrückung des automatischen und fahrerunabhängigen Ausschaltens des Antriebsaggregats des Kraftfahrzeugs gegebenenfalls, d. h. in bestimmten Fahrwegssituationen und/oder Fahrwegskonstellationen, in denen die positionsbezogene Fahrwegsinformation das fahrwegsbezogene Kriterium erfüllt, um möglicherweise wertvolle Millisekunden oder Sekunden zu verkürzen.

In Weiterbildung der Erfindung ist es möglich, dass ein wenigstens einen auf dem Ist-Fahrweg oder zukünftigen Fahrweg vorausliegenden Kreisverkehr und/oder eine Kreuzung beschreibendes fahrwegsbezogenes Kriterium verwendet wird. Selbstverständlich kann ein fahrwegsbezogenes Kriterium auch bestimmte andere Fahrwegssituationen und/oder Fahrwegskonstellationen beinhalten. Beispiele hierfür sind Einfahrten von einem Fahrweg in einen weiteren Fahrweg, wie insbesondere eine Schnellstraße, oder Einfahrten von Grundstücken, Parkplätzen oder dergleichen in einen Fahrweg. Grundsätzlich werden durch die fahrwegsbezogenen Kriterien also Fahrwegssituationen und/oder Fahrwegskonstellationen abgebildet, in denen ein schnelles Anfahren des Kraftfahrzeugs aus dem Stand erforderliche Verkehrssituationen auftreten können bzw. regelmäßig auftreten.

Zweckmäßig kann eine eine eine Klassifizierung des Ist-Fahrwegs beschreibende fahrwegsbezogene Positionsinformation verwendet werden. Die Klassifizierung der positionsbezogenen Fahrwegsinformation ermöglicht eine Einteilung bzw. Zuordnung des aktuell von dem Kraftfahrzeug befahrenen Ist-Fahrwegs oder Ist-Fahrwegabschnitts in oder zu bestimmten Fahrwegskategorien. Denkbar ist hierbei etwa, dass mittels der Klassifizierung ein Fahrweg als innerorts oder außerorts, insbesondere als Schnellstraße, klassifiziert wird. Wie beschrieben, ist es insbesondere beim Einfahren in Schnellstraßen, d. h. beim Stehen an Einmündungen in Schnellstraßen, wie Landstraßen, Autobahnen etc., für ein schnelles Wiederanfahren zweckmäßig, das automatische und fahrerunabhängige Ausschalten des Antriebsaggregats des Kraftfahrzeugs im Stand zu unterdrücken. Im Rahmen des erfindungsgemäßen Verfahrens Sonach ist es möglich, die Klassifizierung des Ist-Fahrwegs zu berücksichtigen, d. h. z. B., dass erfindungsgemäße Verfahren nur außerorts, mithin bei einem als außerorts klassifizierten Ist-Fahrweg oder bei Einfahren in einen als außerorts klassifizierten Ist-Fahrweg durchzuführen. Denkbar ist es auch, bestimmte Fahrwege als Vorfahrtsstraßen oder dergleichen zu klassifizieren, so dass im Rahmen der Klassifizierung des Ist-Fahrwegs auch gewisse, verkehrstechnisch gegebene Fahrwegshierarchien berücksichtigt werden können.

Es ist möglich, vorgegebene oder von einem Bediener vorgebbare fahrwegsbezogene Kriterien zu verwenden. Es können sonach im Rahmen des erfindungsgemäßen Verfahrens, insbesondere werksseitig, vorgegebene fahrwegsbezogene Kriterien verwendet werden. Diese können gegebenenfalls von einem Bediener bzw. Fahrer individuell angepasst werden. Mithin ist es denkbar, dass der Bediener bzw. Fahrer einen Satz werksseitig vorgegebener fahrwegsbezogener Kriterien abändert bzw. modifiziert. Hierbei ist es möglich, dass ein Bediener bzw. Fahrer zusätzlich weitere fahrwegsbezogene Kriterien ergänzt oder vorgegebene fahrwegsbezogene Kriterien zumindest temporär entfernt, so dass diese im Rahmen der Durchführung des erfindungsgemäßen Verfahrens nicht berücksichtigt werden. Zweckmäßig kann dies etwa sein, wenn der Bediener respektive Fahrer beim Einfahren von seinem Grundstück in eine vielbefahrene Straße eine Unterdrückung des automatischen und fahrerunabhängigen Ausschaltens des Antriebsaggregats des Kraftfahrzeugs als hilfreich erachtet, da ihm derart das Einfädeln in den fließenden Verkehr erleichtert wird.

Bevorzugt wird die wenigstens eine positionsbezogene Fahrwegsinformation über wenigstens eine als Navigationseinrichtung und/oder das Umfeld des Kraftfahrzeugs sensierende Fahrzeugumfeldsensorik ausgebildete Positionserfassungseinrichtung oder über wenigstens eine mit einer entsprechenden Navigationseinrichtung und/oder Fahrzeugumfeldsensorik kommunizierende Positionserfassungseinrichtung ermittelt. Unter einer Fahrzeugumfeldsensorik ist beispielsweise wenigstens eine den Nah- und/oder Fernbereich um das Kraftfahrzeug sensierende Radarsensorik zu verstehen. In allen genannten Ausführungsformen ist es sonach möglich, hochgenaue bzw. hochaufgelöste Ist-Positionen des Kraftfahrzeugs auf dem Ist-Fahrweg zu ermitteln, so dass anhand einer positionsbezogenen Fahrwegsinformation eine hochgenaue bzw. hochaufgelöste Darstellung der Ist-Position des Kraftfahrzeugs auf dem Ist-Fahrweg möglich ist.

Daneben betrifft die Erfindung ein Kraftfahrzeug, umfassend eine Steuereinrichtung zum automatischen und fahrerunabhängigen Ein- oder Ausschalten wenigstens eines Antriebsaggregats des Kraftfahrzeugs im Stand, welche Steuereinrichtung in Abhängigkeit wenigstens einer die Ist-Position des Kraftfahrzeugs auf einem Fahrweg betreffenden positionsbezogenen Fahrwegsinformation sowie des Vorliegens wenigstens einer weiteren Randbedingung ein Ausschalten des Antriebsaggregats veranlasst. Das Kraftfahrzeug ist zur Durchführung des vorstehend beschriebenen erfindungsgemäßen Verfahrens ausgebildet, somit gelten sämtliche Ausführungen zum erfindungsgemäßen Verfahren auch für das erfindungsgemäße Kraftfahrzeug.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipdarstellung eines erfindungsgemäßen Kraftfahrzeugs;
- Fig. 2: das Kraftfahrzeug gemäß Fig. 1 in einer beispielhaften Fahr wegs- bzw. Verkehrssituation;
- Fig. 3: das Kraftfahrzeug gemäß Fig. 1 in einer beispielhaften Fahr wegs- bzw. Verkehrssituation; und
- Fig. 4: das Kraftfahrzeug gemäß Fig. 1 in einer beispielhaften Fahr wegs- bzw. Verkehrssituation.

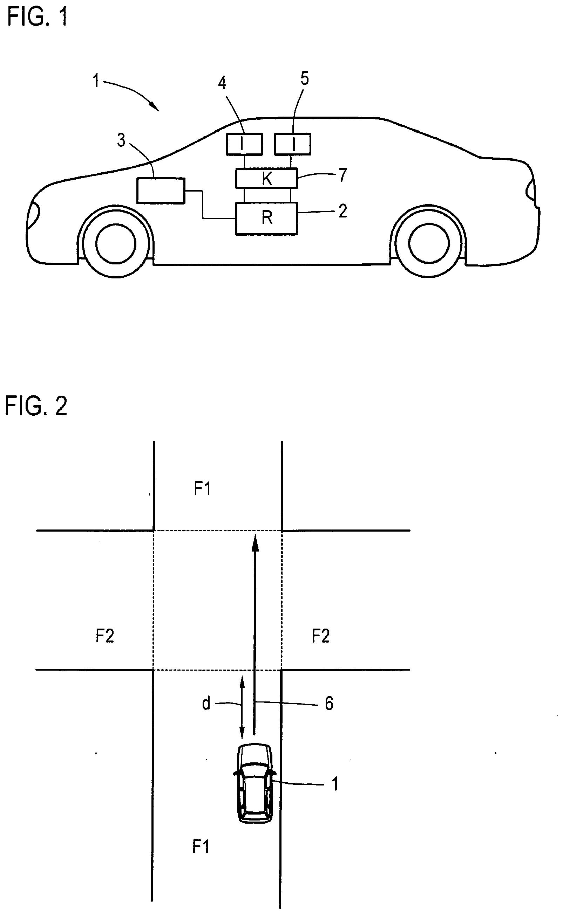

Fig. 1 zeigt eine Prinzipdarstellung eines erfindungsgemäßen Kraftfahrzeugs 1. Das Kraftfahrzeug 1 umfasst eine als Start-Stopp-Automatik bezeichnete Steuereinrichtung 2 zum automatischen und fahrerunabhängigen Ein- oder Ausschalten des in Form eines Brennkraftmotors ausgebildeten Antriebsaggregats 3 des Kraftfahrzeugs 1 im Stand. Die Steuereinrichtung 2 ist sonach dazu ausgebildet, in Abhängigkeit wenigstens einer die Ist-Position des Kraftfahrzeugs 1 auf einem Fahrweg F beschreibenden positionsbezogenen Fahrwegsinformation I sowie des Vorliegens wenigstens einer weiteren Randbedingung R, worunter beispielsweise ein bestimmtes während des Stillstands des Kraftfahrzeugs 1 aufgenommenes Zeitintervall oder die Drehzahl des Antriebsaggregats 3 zu verstehen ist, ein Ausschalten des Antriebsaggregats 3 zu veranlassen. Zur Ermittlung der positionsbezogenen Fahrwegsinformation I kommuniziert die Steuereinrichtung 2 mit einer kraftfahrzeugseitig vorgesehenen Navigationseinrichtung 4 und einer kraftfahrzeugseitigen, als Radarsensorik ausgebildeten, das Fahrzeugumfeld sensierenden Fahrzeugumfeldsensorik 5 im Sinne einer Positionserfassungseinrichtung.

Das erfindungsgemäße Verfahren wird anhand der in den Fig. 2 - 4 gezeigten beispielhaften Fahrwegs- bzw. Verkehrssituationen erläutert. Fig. 2 zeigt das Kraftfahrzeug 1 gemäß Fig. 1 in einer beispielhaften Fahrwegs- bzw. Verkehrssituation. Dabei bewegt sich das Kraftfahrzeug 1 auf dem sich in vertikaler Richtung erstreckenden Fahrweg F1 in Richtung des Pfeils 6 in vertikaler Richtung nach oben. Ersichtlich wird der Fahrweg F1 durch den sich horizontal erstreckenden Fahrweg F2 gequert, so dass sich eine Kreuzungssituation ergibt. Die beiden Fahrwege F1 und F2 sind allgemein als Verkehrsstraßen zu verstehen. Eine ähnlich gelagerte Fahrwegssituation ergäbe sich etwa bei einer Einmündung des Fahrwegs F1 in einen Kreisverkehr oder bei Einfahren auf einen Fahrweg von einem Grundstück.

Die anhand der Navigationseinrichtung 4 und/oder der Fahrzeugumfeldsensorik 5 ermittelte positionsbezogene Fahrwegsinformation I drückt sonach aus, dass sich das Kraftfahrzeug 1 auf der in Fig. 2 gezeigten Position auf dem Fahrweg F1 befindet. Hierbei kann der Fahrweg F1 gleichermaßen qualifiziert werden, d. h., es kann z. B. ermittelt werden, dass sich dabei um eine Straße innerhalb oder außerhalb eines Orts handelt. In Fig. 2 ist der Fahrweg F2 eine Vorfahrtsstraße, d. h. sich auf dem Fahrweg F1 befindliche Kraftfahrzeuge 1 müssen entsprechend auf dem Fahrweg F2 befindliche Kraftfahrzeuge passieren lassen.

Die positionsbezogene Fahrwegsinformation I wird über eine kraftfahrzeugseitig vorgesehene Verarbeitungs- und/oder Recheneinheit 7, welche auch einen Teil der Steuereinrichtung 2 darstellen kann, mit wenigstens einem bestimmten fahrwegsbezogenen Kriterium K verglichen. Das fahrwegsbezogene Kriterium K kann beispielsweise wenigstens eine auf dem Ist-Fahrweg oder zukünftigen Fahrweg, welcher sich beispielsweise aufgrund einer in der Navigationseinrichtung 4 eingestellten Route ergibt, vorausliegende Kreuzung (vgl. Fig. 2 - 4) beschreiben oder beinhalten.

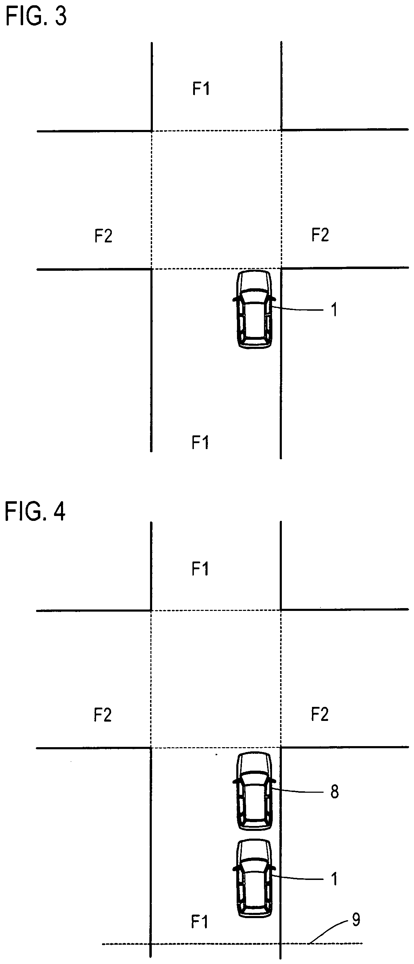

In der in Fig. 2 gezeigten Fahrwegs- oder Verkehrssituation befindet sich das Kraftfahrzeug 1 auf dem Fahrweg F1 noch in einem bestimmten Abstand d zu der vorausliegenden Kreuzung. Bei der in Fig. 3 gezeigten Fahrwegs- oder Verkehrssituation steht das Kraftfahrzeug 1 unmittelbar an der Kreuzung. Der Fahrer möchte die Kreuzung überqueren und seine Fahrt auf dem Fahrweg F1 in Richtung des Pfeils 6 fortsetzen. Die nunmehr im Vergleich zu Fig. 2 veränderte Ist-Position des Kraftfahrzeugs 1 auf dem Fahrweg F1 wird wiederum in Form einer positionsbezogenen Fahrwegsinformation I ermittelt. Es erfolgt ein Vergleichen der positionsbezogene Fahrwegsinformation I mit einem entsprechenden fahrwegsbezogenen Kriterium K, welches beispielsweise eine Kreuzung beschreibt. Sämtliche fahrwegsbezogenen Kriterien sind in einem der Verarbeitungs- und/oder Recheneinheit 7 zugeordneten Speicher (nicht gezeigt) enthalten. Die fahrwegsbezogenen Kriterien K können, insbesondere werksseitig, vorgegeben oder von einem Fahrer oder Bediener vorgegeben bzw. individuell angepasst werden.

Mithin erfüllt in der in Fig. 3 gezeigten Situation die positionsbezogene Fahrwegsinformation I das eine Kreuzung beschreibende fahrwegsbezogene Kriterium K, so dass eine Abfrage des Vorliegens weiterer Randbedingungen R unterbleibt. Entsprechend wird, sofern das Kraftfahrzeug 1 aufgrund der Verkehrssituation vor Überqueren der Kreuzung in den Stand gebremst werden muss, wie es in Fig. 3 gegeben ist, das automatische und fahrerunabhängige Ausschalten des Antriebsaggregats 3 des Kraftfahrzeugs 1 temporär unterdrückt. Die Funktion der Steuereinrichtung 2 ist somit temporär deaktiviert, das Antriebsaggregat 3 des Kraftfahrzeugs 1 ist bei der in Fig. 3 gezeigten Fahrwegs- bzw. Verkehrssituation weiterhin in Betrieb. Somit kann das Kraftfahrzeug 1 ohne den durch die Wiederinbetriebnahme bzw. das Wiederanlassen des Antriebsaggregats 3 bedingten zeitlichen Verzug über die Kreuzung bewegt werden, so dass es dem Fahrer durch die Möglichkeit eines schnellen Wiederanfahrens zügiger und gegebenenfalls sicherer möglich ist, die Kreuzung zu überqueren.

Anhand der in Fig. 4 gezeigten beispielhaften Fahrwegs- bzw. Verkehrssituation soll gezeigt werden, dass das fahrwegsbezogene Kriterium K auch bereits bei Annäherung des Kraftfahrzeugs 1 an die Kreuzung erfüllt sein kann, welche Annäherung wiederum durch die positionsbezogene Fahrwegsinformation I erfasst und ausgedrückt wird. In Fig. 4 befindet sich vor dem Kraftfahrzeug 1 ein weiteres, unmittelbar an der Kreuzung stehendes Kraftfahrzeug 8. Gleichermaßen ist auch bei der in Fig. 4 gezeigten Fahrwegs- bzw. Verkehrssituation das fahrwegsbezogene Kriterium K durch die positionsbezogene Fahrwegsinformation I erfüllt. Hier umfasst das die Kreuzung beschreibende fahrwegsbezogene Kriterium K einen Abstandsgrenzwert bzw. Abstandsbereich (vgl. gestrichelte Linie 9) zu der Kreuzung. Mithin ist für sämtliche Ist-Positionen des Kraftfahrzeugs 1 auf dem Fahrweg F1 innerhalb dem zwischen der Kreuzung und der Linie 9 aufgespannten Abstandskorridor das fahrwegsbezogene Kriterium K erfüllt. D. h. an sämtlichen Positionen des Kraftfahrzeugs 1 innerhalb des Korridors wird die Abfrage des Vorliegens weiterer Randbedingungen R und somit ein automatisches und fahrerunabhängiges Ausschalten des Antriebsaggregats 3 des Kraftfahrzeugs 1 im Stand unterdrückt. Das Antriebsaggregat 3 wird somit nicht abgeschaltet.

Hierdurch ergibt sich, wenn das vor dem Kraftfahrzeug 1 befindliche Kraftfahrzeug 8 in die Kreuzung einfährt, diese überquert oder nach links oder rechts auf den Fahrweg F2 abbiegt, die Möglichkeit für das Kraftfahrzeug 1, die Kreuzung, sofern diese frei ist, schnell zu überqueren, wobei das Antriebsaggregat 3 trotz zwischenzeitlichem Stillstand des Kraftfahrzeugs 1 nicht erneut angelassen werden muss. Derart sind schnelle und sichere Wiederanfahrvorgänge auch zu entsprechenden in Fig. 4 gezeigten Verkehrssituationen des Kraftfahrzeugs 1 möglich.

## Patentansprüche

1. Verfahren zum Betrieb eines Kraftfahrzeugs (1), umfassend eine Steuereinrichtung (2) zum automatischen und fahrerunabhängigen Ein- oder Ausschalten wenigstens eines Antriebsaggregats (3) des Kraftfahrzeugs (1) im Stand, welche Steuereinrichtung (2) in Abhängigkeit wenigstens einer die Ist-Position des Kraftfahrzeugs (1) auf einem Fahrweg (F) betreffenden positionsbezogenen Fahrwegsinformation (I) sowie in Abhängigkeit des Vorliegens wenigstens einer weiteren Randbedingung (R) ein Ausschalten des Antriebsaggregats (3) veranlasst, wobei zunächst nur die wenigstens eine positionsbezogene Fahrwegsinformation (I) ermittelt wird und, sofern diese wenigstens ein fahrwegsbezogenes Kriterium (K) erfüllt, eine Abfrage des Vorliegens der wenigstens einen weiteren Randbedingung (R) unterbleibt;
**dadurch gekennzeichnet,**
**dass** das fahrwegsbezogene Kriterium (K) erfüllt ist, wenn sich das Kraftfahrzeug (1) direkt an einer Einmündung in einen Kreisverkehr oder in eine Schnellstraße oder in einem bestimmten Abstand oder Abstandsbereich zu einer Einmündung in einen Kreisverkehr oder in eine Schnellstraße befindet.

2. Verfahren nach Anspruch 1,
**dadurch gekennzeichnet,**
**dass** eine eine Klassifizierung des Ist-Fahrwegs beschreibende fahrwegsbezogene Positionsinformation (I) verwendet wird.

3. Verfahren nach Anspruch 2,
**dadurch gekennzeichnet,**
**dass** mittels der Klassifizierung (K) ein Fahrweg (F) als innerorts oder außerorts, insbesondere als Schnellstraße, klassifiziert wird.

4. Verfahren nach einem der vorangehenden Ansprüche,
**dadurch gekennzeichnet,**
**dass** vorgegebene oder von einem Bediener vorgebbare fahrwegsbezogene Kriterien (K) verwendet werden.

5. Verfahren nach einem der vorangehenden Ansprüche,
**dadurch gekennzeichnet,**
**dass** die wenigstens eine positionsbezogene Fahrwegsinformation (I) über wenigstens eine als Navigationseinrichtung (4) und/oder das Umfeld des Kraftfahrzeugs (1) sensierende Fahrzeugumfeldsensorik (5) ausgebildete Positionserfassungseinrichtung oder über wenigstens eine mit einer entsprechenden Navigationseinrichtung (4) und/oder Fahrzeugumfeldsensorik (5) kommunizierende Positionserfassungseinrichtung ermittelt wird.

6. Kraftfahrzeug (1), umfassend eine Steuereinrichtung (2) zum automatischen und fahrerunabhängigen Ein- oder Ausschalten wenigstens eines Antriebsaggregats (3) des Kraftfahrzeugs (1) im Stand, welche Steuereinrichtung (2) in Abhängigkeit wenigstens einer die Ist-Position des Kraftfahrzeugs (1) auf einem Fahrweg (F) betreffenden positionsbezogenen Fahrwegsinformation (I) sowie des Vorliegens wenigstens einer weiteren Randbedingung (R) ein Ausschalten des Antriebsaggregats (3) veranlasst, wobei das Kraftfahrzeug (1) zur Durchführung eines Verfahrens nach einem der vorangehenden Ansprüche ausgebildet ist.

## Claims

1. Method for operating a motor vehicle (1), comprising a control device (2) for the automatic and driver-independent switching-on or switching-off of at least one drive aggregate (3) of the motor vehicle (1) when stationary, which control device (2) depending on at least one position-related item of route information (I) concerning the actual position of the motor vehicle (1) on a route (F) and depending on the presence of at least one further parameter (R) authorises a switching-off of the drive aggregate (3), wherein initially only the at least one position-related item of route information (I) is determined and, inasmuch as this fulfils at least one route-related criterion (K), a request for the presence of the at least one further parameter (R) is not made,
**characterised in**
**that** the route-related criterion (K) is fulfilled when the motor vehicle (1) is located directly at a junction into a roundabout or into a highway or in a specified distance or distance range from a junction into a roundabout or into a highway.

2. Method according to claim 1,
**characterised in**
**that** a route-related item of position information (I) describing a classification of the actual route is used.

3. Method according to claim 2,
**characterised in**
**that** by means of the classification (K) a route (F) is classified as urban or non-urban, in particular as a highway.

4. Method according to any of the preceding claims,
**characterised in**
**that** criteria (K) are used which are predetermined or are able to be predetermined by an operator.

5. Method according to any of the preceding claims,
**characterised in**
**that** the at least one position-related item of route information (I) is detected via at least one position detecting device designed as a navigation device (4) and/or vehicle environment sensor means (5) sensing the environment of the motor vehicle (1) or via at least one position detecting device communicating with an appropriate navigation device (4) and/or vehicle environment sensor means (5).

6. Motor vehicle (1) comprising a control device (2) for the automatic and driver-independent switching-on or switching-off of at least one drive aggregate (3) of the motor vehicle (1) when stationary, which control device (2) depending on at least one position-related item of route information (I) concerning the actual position of the motor vehicle (1) on a route (F) and depending on the presence of at least one further parameter (R) authorises a switching-off of the drive aggregate (3), wherein the motor vehicle (1) is configured to carry out a method according to any of the preceding claims.

## Revendications

1. Procédé de fonctionnement d'un véhicule automobile (1), comprenant un dispositif de commande (2) pour la mise en marche ou à l'arrêt automatique et indépendante du conducteur d'au moins un groupe d'entraînement (3) du véhicule automobile (1) arrêté, lequel dispositif de commande (2) provoque une mise à l'arrêt du groupe d'entraînement (3) en fonction d'au moins une information de trajet se rapportant à la position (I) concernant la position réelle du véhicule automobile (1) sur un trajet (F) ainsi qu'en fonction de la présence d'au moins une autre condition marginale (R), dans lequel d'abord seule l'au moins une information de trajet se rapportant à la position (I) est déterminée et, si celle-ci remplit au moins un critère se rapportant au trajet (K), une demande de la présence de l'au moins une autre condition marginale (R) n'a pas lieu ;
**caractérisé en ce**
**que** le critère se rapportant au trajet (K) est rempli lorsque le véhicule automobile (1) se trouve directement à une entrée dans un rond-point ou dans une voie rapide ou à une certaine distance ou plage de distance d'une entrée dans un rond-point ou dans une voie rapide.

2. Procédé selon la revendication 1,
**caractérisé en ce**
**qu'**une information de position se rapportant au trajet (I) décrivant une classification du trajet réel est utilisée.

3. Procédé selon la revendication 2,
**caractérisé en ce**
**qu'**un trajet (F) est classé comme en agglomération ou hors agglomération, en particulier comme voie rapide, au moyen de la classification (K).

4. Procédé selon l'une quelconque des revendications précédentes,
**caractérisé en ce**
**que** des critères se rapportant au trajet (K) prédéfinis ou pouvant être prédéfinis par un opérateur sont utilisés.

5. Procédé selon l'une quelconque des revendications précédentes,
**caractérisé en ce**
**que** l'au moins une information de trajet se rapportant à la position (I) est déterminée par le biais d'au moins un dispositif de détection de position réalisé en tant que dispositif de navigation (4) et/ou capteur d'environnement de véhicule automobile (5) détectant l'environnement du véhicule automobile (1) ou par le biais d'au moins un dispositif de détection de position communiquant avec un dispositif de navigation (4) et/ou capteur d'environnement de véhicule automobile (5) correspondant.

6. Véhicule automobile (1), comprenant un dispositif de commande (2) pour la mise en marche ou à l'arrêt automatique et indépendante du conducteur d'au moins un groupe d'entraînement (3) du véhicule automobile (1) arrêté, lequel dispositif de commande (2) provoque une mise à l'arrêt du groupe d'entraînement (3) en fonction d'au moins une information de trajet se rapportant à la position (I) concernant la position réelle du véhicule automobile (1) sur un trajet (F) ainsi que de la présence d'au moins une autre condition marginale (R), dans lequel le véhicule automobile (1) est réalisé pour l'exécution d'un procédé selon l'une quelconque des revendications précédentes.
